Europäisches Patentamt

European Patent Office

Office européen des brevets

(19)

(11) Veröffentlichungsnummer: **0 246 665**
**B1**

(12) **EUROPÄISCHE PATENTSCHRIFT**

(45) Veröffentlichungstag der Patentschrift: 08.08.90

(21) Anmeldenummer: 87107548.7

(22) Anmeldetag: 23.05.87

(51) Int. Cl.⁵: **F 16 J 15/447,** F 16 J 15/40, F 01 D 11/02

(54) Berührungsfreie Dichtung.

(30) Priorität: 23.05.86 DE 3617279

(43) Veröffentlichungstag der Anmeldung:
25.11.87 Patentblatt 87/48

(45) Bekanntmachung des Hinweises auf die Patenterteilung:
08.08.90 Patentblatt 90/32

(84) Benannte Vertragsstaaten:
DE FR GB IT SE

(56) Entgegenhaltungen:
DE-C- 512 446
FR-A- 2 388 181
US-A- 3 132 906

(73) Patentinhaber: MTU MOTOREN- UND TURBINEN-UNION MÜNCHEN GMBH
Dachauer Strasse 665 Postfach 50 06 40
D-8000 München 50 (DE)

(72) Erfinder: Krauss, Olaf
Gerhardt-Hauptmann Strasse 15
D-8047 Karlsfeld (DE)

Courier Press, Leamington Spa, England.

**Beschreibung**

Die Erfindung betrifft eine berührungsfreie Dichtung zwischen einer rotierenden Welle und einer sie konzentrisch umgebenden Umfangsfläche zur Trennung des zwischen der Welle und der Umfangsfläche gebildeten zylindrischen Raumes in zwei axiale Abschnitte.

Eine berührungsfreie Dichtung ist z.B. aus der deutschen Offenlegungsschrift 31 19 467 bekannt.

Bei der bekannten Lagerdichtung werden Federn verwendet, die den Dichtring gegen eine Dichtfläche axial anpressen. Es hat sich gezeigt, daß eine solche Ausbildung den gestellten Anforderungen bei hochtourigen Turbomaschinen dann nicht vollständig gewachsen ist, wenn im Betrieb an der Stelle, an der die Dichtfläche liegt, hohe Umfangsgeschwindigkeiten auftreten. Diese Anforderungen gelten zusätzlich zu den bekannten Forderungen der Beherrschbarkeit der Fliehkräfte und hoher Temperaturen.

Nicht zuletzt sollen auch Toleranzen, Unrundheiten oder kleine longitudinale oder Schlingerbewegungen zwischen den Dichtflächen beherrschbar sein.

Aufgabe der Erfindung ist es, eine berührungsfreie Dichtung zu schaffen, die unter Beibehaltung eines minimalen Dichtungsspaltes in relativ großem Rahmen radiale Toleranzen ebenso wie axiales Spiel auszugleichen bzw. betriebsmäßig zu beherrschen gestattet, und dabei eine hohe Dichtwirkung erzielt.

Gelöst wird die Aufgabe dadurch, daß auf der Welle drehfest eine Scheibe angeordnet ist, welche zwei radial beweglich geführte zentripetal vorgespannte Scheibenhälften umfaßt, wobei die Vorspannkraft so auf die Betriebsdrehzahl der Welle abgestimmt ist, daß die Scheibenhälften bei Betriebsdrehzahl aus ihrer in Ruhelage im wesentlichen eine Kreisscheibe bildenden Kontur nach außen wandern, so daß zwischen der umgebenden Umfangsfläche und dem Außenumfang der Scheibe ein in Umfangsrichtung konische Abschnitte ausbildender Spalt entsteht.

Da die Kreisscheibe und die radial außen liegende Umfangsfläche unterschiedliche Radien aufweisen, verengt sich der im statischen Zustand etwa kreisringförmige Spalt bei Rotation der Welle zu konischer Form. Vorteilhafterweise bildet sich in diesem Spalt dadurch ein von dynamischen Gaslagern bekannter Gasspalt aus, der aufgrund seiner geringen Spaltweite eine Dichtung zwischen den beidseitig axial der Kreisscheibe befindlichen Räumen bildet. Durch den Gaslagereffekt wird weiterhin vorteilhaft die Berührungsfreiheit der Dichtung sichergestellt, so daß weiterhin keinerlei Beschränkungen hinsichtlich der Wellendrehzahl auftreten.

Mit ihr werden auch die genannten weiteren Anforderungen für den Betrieb einer Turbomaschinen-Wellenlagerung, insbesondere einer Zwischenwellenlagerung erfüllt. Insbesondere ist die erfindungsgemäße Dichtung nicht nur für gleichsinnig drehende, sondern auch für gegenseitig drehende Wellen geeignet. Dies eröffnet der Erfindung eine ganze Reihe neuer Anwendungsmöglichkeiten.

Bei der Erfindung werden keine betriebsmäßig wirkenden Federelemente benötigt und durch die geschickte Ausbildung der Scheibe bzw. Scheibenteile wird an ihrem Umfang eine Dichtung mit gasdynamischem Schmiereffekt möglich. Zugleich kann die erfindungsgemäße Dichtung Unrundheiten wie den Schlag einer Welle ausgleichen bzw. beherrschen und sowohl radiale Toleranzen als auch axiale Toleranzen und Bewegungen in vorgegebenem großen Rahmen beherrschen.

In weiterer Ausbildung der Erfindung ist die Oberfläche am Außenumfang der Scheibe so gestaltet, daß eine Verstärkung des durch die Konizität des Spaltes herbeigeführten Gaslagereffektes entsteht. Dies geschieht bevorzugt dadurch, daß diese mit einem fischgrätenartigen Lufttaschenmuster versehen ist. Dadurch läßt sich eine weitere Reduzierung der Spalthöhe bei gleichbleibender Betriebssicherheit der Sichtung erreichen, wobei gleichzeitig die Gefahr negativer Auswirkungen von Exzentrizitäten zwischen Welle und Gehäuse verringert wird.

Weitere vorteilhafte Ausgestaltungen der Erfindung sind in Unteransprüchen dargestellt. Zur Erfindung gehören ausdrücklich auch alle Kombinationen dieser Merkmale.

Ein Ausführungsbeispiel der Erfindung ist mit der beigefügten Zeichnung rein schematisch dargestellt.

Es zeigen:

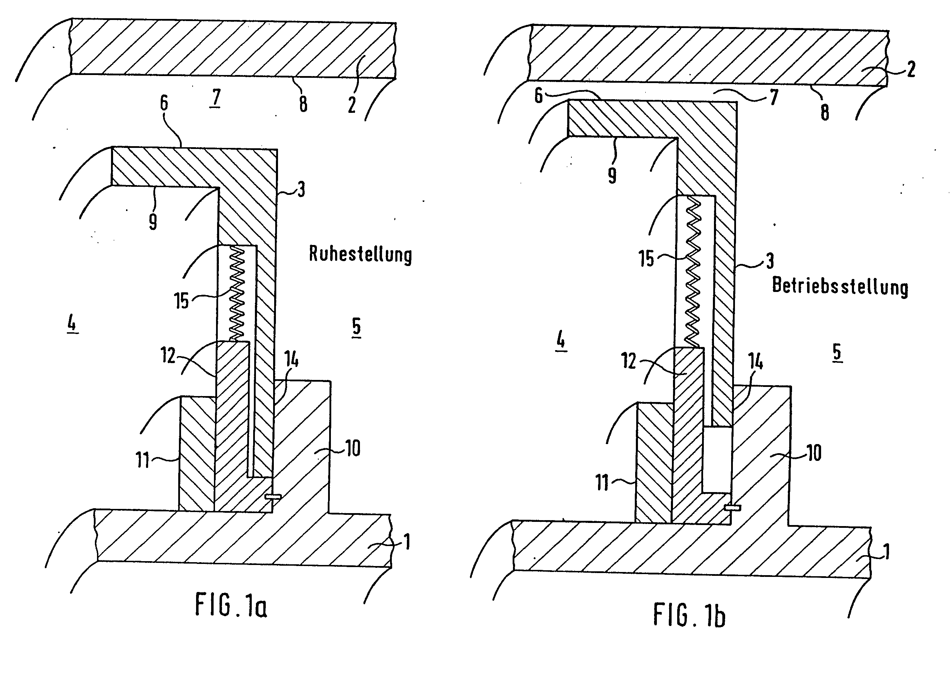

Fig. 1a einen Axialschnitt durch die berührungsfreie Dichtung in Ruhestellung,

Fig. 1b einen Axialschnitt durch die berührungsfreie Dichtung im Betrieb,

Fig. 2a einen Querschnitt durch die Dichtung gemäß Fig. 1a,

Fig. 2b einen Querschnitt durch die Dichtung gemäß Fig. 1b,

Fig. 3 eine Draufsicht auf den Außenumfang der Scheibe 3.

Die Dichtung zwischen einer rotierenden Welle 1 und einer Umfangsfläche 8, die Bestandteil eines Gehäuses 2 oder einer konischen Hohlwelle sein kann, besteht aus einer Scheibe 3, die an ihrem Außenumfang 6 gegenüber der Umfangsfläche 8 abdichtet. Die Scheibe 3 weist radial außen einen axial verlaufenden Bund 9 auf, wodurch der zwischen Umfangsfläche 8 und Außenumfang 6 befindliche konische Spalt 7 verbreitert ist. Die Scheibe 3 ist in einer Halterung, hier zwischen einem Wellenbund 10 der Welle 1 und einer Führung 12, axial positioniert. Über Federn 15 ist die Scheibe 3 mit der Führung 12 derart verbunden, daß im Ruhezustand die Scheibe 3 axial nach innen gezogen ist. Aufgrund der bei Rotation der Welle 1 auftretenden Zentrifugalkraft wird die Scheibe 3 entgegen der Federkraft so weit radial auswärts gezogen, bis durch den im Spalt 7 erzeugten dynamischen Gasgegendruck ein Gleichgewichtszustand entsteht.

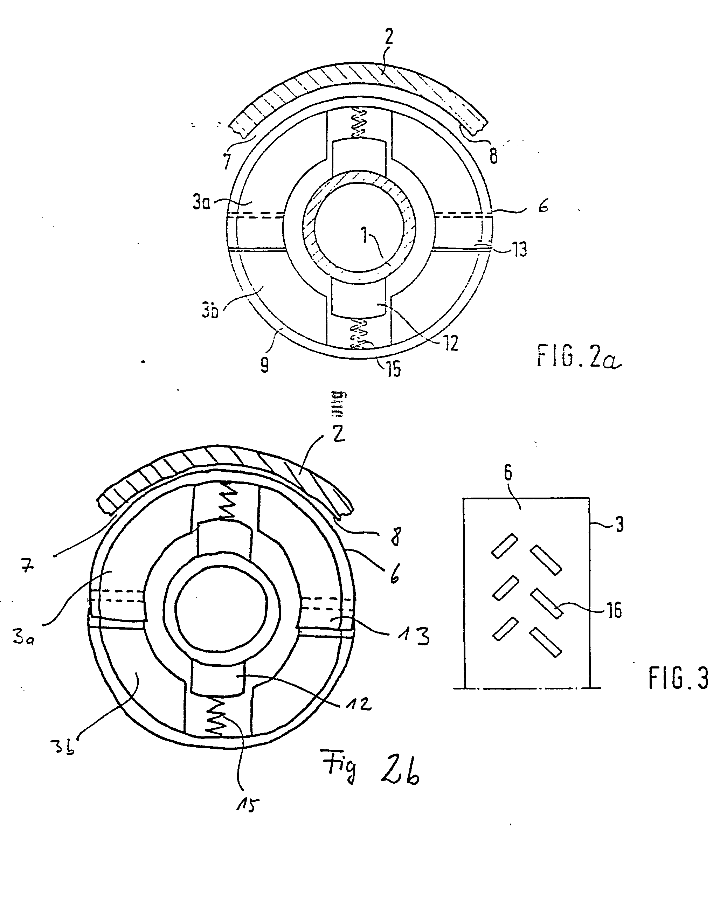

Der ringförmige Außenumfang 6 der Scheibe 3 ist - wie in Fig. 3 zu sehen - als Gaslager mit einem fischgrätartigen Lufttaschenmuster 16 versehen. Die Führung 12 ist zwischen dem Wellenbund 10 und einem auf der Welle 1 befestigten Sicherungsring 11 axial fixiert.

Im Betrieb ist im Abschnitt 4 ein höherer Gasdruck als im Abschnitt 5 anzunehmen. Dadurch wird die Scheibe 3 an der Stelle 14 axial gegen den Wellenbund 10 gepresst, so daß hierdurch eine Abdichtung der beiden Abschnitte 4, 5 gegeneinander erfolgt. Der radial außen verbleibende Spalt 7 ist aufgrund des Gaslagereffektes so gering, daß nur geringe Leckströme zwischen den Abschnitten 4 und 5 fließen.

Wie besonders aus Fig. 2 ersichtlich, ist die Scheibe 3 in zwei Scheibenhälften 3a, 3b geteilt, die einander an Stoßfugen 13 überlappen. Die Scheibenhälften 3a, 3b werden von den Führungen 12, die stegartig ausgebildet sind, zentrierend geführt.

Fig. 2b zeigt die in Betriebsstellung auseinandergezogenen Scheibenhälften 3a, 3b, wodurch der Spalt 7 in Umfangsrichtung konische Form annimmt. Die Breite der Überlappung an der Stoßstelle 13 ist dabei geringer als in der Ruhestellung.

## Patentansprüche

1. Berührungsfreie Dichtung zwischen einer rotierenden Welle (1) und einer sie konzentrisch umgebenden Umfangsfläche (8) zur Trennung des zwischen der Welle (1) und der Umfangsfläche (8) gebildeten zylindrischen Raumes in zwei axiale Abschnitte (4, 5), dadurch gekennzeichnet, daß auf der Welle (1) drehfest eine Scheibe (3) angeordnet ist, welche zwei radial beweglich geführte, mittels einer Feder (15) zentripetal vorgespannte Scheibenhälften (3a, 3b) umfaßt, wobei die Vorspannkraft so auf die Betriebsdrehzahl der Welle (1) abgestimmt ist, daß die Scheibenhälften in (3a, 3b) bei Betriebsdrehzahl aus ihrer in Ruhelage im wesentlichen eine Kreisscheibe bildenden Kontur nach außen wandern, so daß zwischen der umgebenden Umfangsfläche (8) und dem Außenumfang (6) der Scheibe (1) ein in Umfangsrichtung konische Abschnitte ausbildender Spalt (7) entsteht.

2. Berührungsfreie Dichtung nach Anspruch 1, dadurch gekennzeichnet, daß die Scheibe (3) bzw. die Scheibenhälften (3a, 3b) auf der Welle (1) an einen Wellenbund (10) axial positioniert und dichtend gehalten sind.

3. Berührungsfreie Dichtung nach Anspruch 1 oder Anspruch 2, dadurch gekennzeichnet, daß die Scheibenhälften (3a, 3b) an ihrer Stoßfuge (13) sich überlappend ausgebildet sind.

4. Berührungsfreie Dichtung nach den Ansprüchen 1 bis 3, dadurch gekennzeichnet, daß die Oberfläche am Außenumfang (6) der Scheibe (3) bzw. der Scheibenhälften (3a, 3b) so gestaltet ist, daß eine Verstärkung des durch die Konizität des Spaltes (7) herbeigeführten Gaslagereffekts entsteht.

5. Berührungsfreie Dichtung nach Anspruch 4, dadurch gekennzeichnet, daß die Oberfläche am Außenumfang (6) der Scheibe (3) bzw. der Scheibenhälften (3a, 3b) mit einem fischgrätartigen Lufttaschenmuster (16) versehen ist.

6. Berührungsfreie Dichtung nach einem der Ansprüche 1 bis 5, dadurch gekennzeichnet, daß die Umfangsfläche (8) die Innenfläche einer Hohlwelle bildet.

## Revendications

1. Joint d'étanchéité sans contact entre un arbre de rotation (1) et une surface périphérique (8) entourant celui-ci concentriquement afin de séparer en deux parties axiales (4, 5) la chambre cylindrique constituée entre l'arbre (1) et la surface périphérique (8), caractérisé en ce qu'il est disposé bloqué en rotation sur l'arbre (1) un disque (3) qui comprend deux moitiés de disques (3a, 3b) précontraints par la force centripète, pourvues de mobilité radiale et guidées au moyen d'un ressort (15), dont la force de précontrainte est coordonnée avec la vitesse de rotation en service de l'arbre (1), de telle sorte que les moitiés de disque (3a, 3b) se déplacent vers l'extérieur hors de leur contour constituant essentiellement un disque circulaire en position de repos et qu'en conséquence une fente (7) constituant des sections coniques se crée entre la surface périphérique (8) environnante et le pourtour extérieur (6) du disque (1).

2. Joint d'étanchéité sans contact selon la revendication 1, caractérisé en ce que le disque (3) ou les moitiés de disque (3a, 3b) sont positionnés axialement sur l'arbre (1) contre un épaulement de l'arbre (10) et sont maintenus en assurant l'étanchéité.

3. Joint d'étanchéité sans contact selon la revendication 1 ou la revendication 2, caractérisé en ce que les moitiés de disque (3a, 3b) se recouvrent à l'endroit de leur joint (13).

4. Joint d'étanchéité sans contact selon les revendications 1 à 3, caractérisé en ce que la surface du pourtour extérieur (6) du disque (3) ou des moitiés de disque (3a, 3b) est constituée de manière à procurer un renforcement de l'effet du palier de gaz produit par la conicité de la fente (7).

5. Joint d'étanchéité sans contact selon la revendication 4, caractérisé en ce que la surface du pourtour extérieur du disque (3) ou des moitiés de disque (3a, 3b) est pourvue de poches d'air implantées en forme d'arête de poisson (16).

6. Joint d'étanchéité sans contact selon l'une des revendications 1 à 5, caractérisé en ce que la surface périphérique (8) constitue la surface intérieure d'un arbre creux.

## Claims

1. Non-contact seal between a rotating shaft (1) and a peripheral surface (8) concentrically surrounding it for dividing the cylindrical space formed between the shaft (1) and the peripheral surface (8) into two axial portions (4, 5), characterised in that arranged on the shaft (1), in rotation-resistant manner, is a disc (3) which comprises two disc halves (3a, 3b) which are centripetally prestressed by means of a spring (15), and guided radially movably, wherein the prestressing force is matched to the operational speed of the shaft (1) so that the disc halves (3a, 3b) drift outwardly at operational speed out of their rest state contour, which has the form of a substantially circular disc, so that between the surrounding peripheral surface (8) and the outer periphery (6) of the disc (1) (sic) a gap (7) is created which forms conical portions in the peripheral direction.

2. Non-contact seal according to claim 1, characterised in that the disc (3) or the disc halves (3a, 3b) are axially positioned on the shaft (1) on a shaft collar (10) and are held in sealing manner.

3. Non-contact seal according to claim 1 or claim 2, characterised in that the disc halves (3a, 3b) are formed so as to be overlapping at their butt joint (13).

4. Non-contact seal according to claims 1 to 3, characterised in that the surface at the outer periphery (6) of the disc (3) or of the disc halves (3a, 3b) is so shaped that reinforcement of the gas layer effect caused by the conicity of the gap (7) is produced.

5. Non-contact seal according to claim 4, characterised in that the surface at the outer periphery (6) of the disc (3) or of the disc halves (3a, 3b) is provided with a fishbone-like air pocket pattern (16).

6. Non-contact seal according to one of claims 1 to 5, characterised in that the peripheral surface (8) forms the inner surface of a hollow shaft.

FIG.1a

Ruhestellung

FIG.1b

Betriebsstellung

EP 0 246 665 B1

FIG.2a

Fig 2b

FIG.3